# EUROPÄISCHE PATENTANMELDUNG

(11) **EP 0 908 838 A2**
(43) Veröffentlichungstag der Anmeldung: **14.04.1999**
(21) Anmeldenummer: 98117098.8
(22) Anmeldetag: 09.09.1998
(51) Int. Cl.: G06K 7/08

(54) **Verfahren zur Datenübertragung zwischen einem Schreib-Lesegerät und einem Transponder**

(30) Priorität: 10.10.1997 DE 19744781
(71) Anmelder: Stobbe, Anatoli, 30890 Barsinghausen (DE)
(72) Erfinder: Stobbe, Anatoli, 30890 Barsinghausen (DE); Scheffler, Hartmut, 31542 Bad Nenndorf (DE)
(74) Vertreter: Patentanwälte Thömen & Körner

(57) **Zusammenfassung**

Es wird Verfahren und eine Vorrichtung zur Datenübertragung zwischen einem Schreib-Lesegerät und einem Transponder beschrieben.

Die Datenübertragung erfolgt durch Feldstärkeänderung eines elektromagnetischen oder magnetischen Feldes und Auswertung der Zeiten zwischen wenigstens zwei aufeinanderfolgenden Feldstärkeänderungen. Eine als Zeitbasis für die Auswertung der Zeiten zwischen den Feldstärkeänderungen dienende Frequenz wird zumindest zu Beginn einer Datenübertragung so kalibriert, daß sie in einer vorgegebenen Beziehung zur Periodendauer der Feldstärkeänderungen steht.

## Beschreibung

Die Erfindung betrifft ein Verfahren zur Datenübertragung zwischen einem Schreib-Lesegerät und einem Transponder nach dem Oberbegriff des Anspruchs 1 sowie eine Vorrichtung zur Durchführung des Verfahrens nach dem Oberbegriff der Ansprüche 11 bis 13.

Systeme aus Schreib-Lesegeräten und Transpondern dienen zur berührungslosen Identifikation von Gegenständen, Personen und Tieren. Der Transponder ist ein Datenspeicher, dessen Informationen mit dem Schreib-Lesegerät drahtlos ausgelesen und verändert werden können.

Die Informationsübertragung erfolgt magnetisch oder elektromagnetisch. Vom Lesegerät zum Transponder wird sie durch Feldstärkeänderung eines hochfrequenten Trägers und Auswertung der Zeiten zwischen aufeinanderfolgenden Feldstärkeänderungen vorgenommen.

Bei der Entwicklung von Transpondersystemen wird besonders großer Wert darauf gelegt, daß wenig Energie verbraucht wird und möglichst alle Teile in einem Chip integriert werden können.

Die erste Anforderung dient bei aktiven Transpondersystemen mit eigener Energieversorgung zur Erzielung einer möglichst großen Batterielebensdauer und bei passiven Transpondersystemen mit Energieversorgung aus dem magnetischen oder elektromagnetischen Feld des Schreib- Lesegerätes zur Erzielung einer möglichst großen Reichweite. Die zweite Anforderung ist wichtig wegen der Größe des Transponders sowie der Herstellungskosten.

Nach dem derzeitigen Stand der Technik kann nur ein RC-Oszillator mit allen frequenzbestimmenden Bauteilen auf einem Siliziumchip integriert werden.

Dieser RC-Oszillator weist prinzipiell bedingt durch den Herstellungsprozeß sowie über den betriebstypischen Temperatur- und Spannungs-Bereich eine Frequenztoleranz von bis zu +/- 30 % bezogen auf seinen im Chipentwurf dimensionierten Nennwert auf.

Wenn die Zeitbasis für die Auswertung der die kodierte Information enthaltenden Zeiten zwischen den Feldstärkeänderungen in einem Dekoder auf der Frequenz eines solchen Oszillators beruht, ergibt sich eine Einschränkung bei der möglichen Datenübertragungsgeschwindigkeit. Um nämlich unterschiedliche Zeiten zwischen den Feldstärkeänderungen des Trägers eindeutig unterscheiden zu können, müssen diese Zeitunterschiede zumindest größer sein als die mögliche Toleranz des Oszillators. Diese Anforderung würde zu einer entsprechend langsamen Datenrate führen, damit die Toleranzen des Oszillators nicht die Dekodierung verfälschen.

Zur Kalibrierung des Oszillators könnte dieser nach der Chipproduktion mit einem Laserstrahl getrimmt oder über Speicherzellen justiert werden. Dies ist aber aufwendig und hat zudem den Nachteil, daß Frequenztoleranzen durch Temperatur- und Spannungsänderungen nicht kompensiert werden können.

Der Erfindung liegt die Aufgabe zugrunde, ein Verfahren zur Datenübertragung zwischen einem Schreib-Lesegerät und einem Transponder und eine Vorrichtung zur Durchführung des Verfahrens dahingehend zu verbessern, daß die Genauigkeit einer als Zeitbasis für die Auswertung der Zeiten zwischen den Feldstärkeänderungen dienenden Frequenz erhöht und dadurch auch eine höhere Datenrate ermöglicht wird.

Diese Aufgabe wird bei einem Verfahren nach dem Oberbegriff des Anspruchs 1 und bei einer Vorrichtung zur Durchführung des Verfahrens nach dem Oberbegriff der Ansprüche 11 bis 13 durch die im jeweiligen kennzeichnenden Teil angegebenen Merkmale gelöst. Weiterbildungen und vorteilhafte Ausgestaltungen ergeben sich aus den Unteransprüchen.

Bei der erfindungsgemäßen Lösung wird durch die mittels der Kalibrierung erzielte Beziehung zwischen der Periodendauer und der Zeitbasis erreicht, daß die Zeiten zwischen den Feldstärkeänderungen durch einfaches Zählen der Pulse der Zeitbasis genau ausgewertet werden können. Dabei lassen sich unterschiedliche Zeiten zwischen den Feldstärkeänderungen, in denen ja die Informationen kodiert sind, auch dann noch eindeutig voneinander unterscheiden, wenn diese Unterschiede gleich oder sogar kleiner als die Ausgangstoleranz der Frequenzbasis sind.

Unter Feldstärkeänderungen werden sowohl das Ein- und Ausschalten eines Feldes als auch die teilweise Absenkung oder Anhebung der Feldstärke eines Feldes verstanden. Gerade bei Ein- und Ausschalten eines Feldes ist die erfindungsgemäße Lösung besonders vorteilhaft, da in den Pausen, also bei abgeschaltetem Feld, keine Möglichkeit einer Synchronisation z. B. mit dem HF-Träger des Schreib-Lesegerätes besteht und somit eine eigene genaue Zeitbasis im Transponder benötigt wird.

Es gelingt mit der erfindungsgemäßen Lösung, ein geringeres Verhältnis der Pulsdauer von langen und kurzen Pulsen, die ihrerseits durch die Zeiten zwischen Feldstärkeänderungen definiert sind, durch Verkürzung der langen Pulse zu erzielen und dadurch die Periodendauer der Datensignale zu reduzieren und die Datenrate zu erhöhen.

Die Kalibrierung zu Beginn einer Datenübertragung berücksichtigt automatisch alle für den aktuellen Betrieb maßgeblichen frequenzbestimmenden Einflüsse, ohne daß deren genauen Ursachen von Bedeutung sind. Somit werden bereits zu Beginn optimale Übertragungsverhältnisse geschaffen. Dies ist besonders bei dynamischen Systemen wichtig, bei denen sich der Transponder nur kurze Zeit im Feld des Schreib-Lesegerätes befindet und daher nur eine kurze Übertragungszeit zur Verfügung steht.

Vorzugsweise wird zur anfänglichen Kalibrierung ein Signal übermittelt, dessen Zeitabstände zwischen den Feldstärkeänderungen vordefiniert sind.

Anhand der Zeitabstände, dessen Maß bekannt und z. B. als Zahlenwert im Transponder abgespeichert ist, lassen sich dann initial die die Zeitbasis bildenden Elemente kalibrieren, so daß die Zeitbasis dann mit der Zeitbasis im Schreib-Lesegerät synchronisiert ist und bei der nachfolgenden Datenübertragung den für eine genaue Auswertung der Signale richtigen Wert besitzt.

Die Kalibriersignale können durch ihre zeitliche Anordnung im Signaltelegramm spezifiziert sein oder auch durch ihre Kodierung von Datensignalen abweichen.

Dabei kann das Kalibriersignal ein durch zwei aufeinanderfolgende Feldstärkeänderungen begrenzter Puls sein, dessen Länge größer als die Periodendauer der anschließenden Datensignale ist.

Bei einer Ausführung der Erfindung wird zumindest zu Beginn der Datenübertragung eine systematische Zeitabweichung von einem Sollwert, die durch die Ungenauigkeit einer zur Auswertung benutzten, internen Zeitbasis auftritt, erfaßt und daraus ein Korrekturwert ermittelt, mit dem die interne Zeitbasis kalibriert wird.

Durch die vordefinierten Zeitabstände zwischen den Feldstärkeänderungen enthält das Kalibriersignal die Information einer Sollfrequenz für die Zeitbasis, mit der die Istfrequenz der Zeitbasis verglichen und auf die Sollfrequenz korrigiert werden kann. Da die Istfrequenz digital erfaßt werden kann und die Sollfrequenz bekannt ist, kann die Abweichung sofort bestimmt und auch die nötige Korrektur in einem Schritt gezielt durchführt werden. Anschließend besteht dann bereits eine ausreichende Genauigkeit für eine korrekte Dekodierung bei der Datenübertragung.

Zusätzlich kann zur nachfolgenden oder dynamischen Kalibrierung die mittlere Periodendauer der über mehrere Perioden erfaßten Datensignale dienen.

Bei einer Ausführung der Erfindung wird dazu zusätzlich während der Datenübertragung die Abweichung vom Sollwert erfaßt und der zu Beginn gewonnene Korrekturwert korrigiert.

Hierbei wird die Zeitbasis auch bei dynamischen Einflüssen korrigiert, wie sie beispielsweise bei passiven Transpondern mit Energieversorgung aus dem Feld des Schreib-Lesegerätes auftreten können. Das ist der Fall, wenn der Abstand zwischen dem Transponder und dem Schreib-Lesegerät während der Datenübertragung verändert wird und dadurch auch die Versorgungsspannung schwankt. Eine Spannungsänderung kann aber auch bei aktiven Transpondern durch Erschöpfen der Batterie eintreten. Auch thermische Einflüsse können kompensiert werden, wie sie z. B. entstehen, wenn Transponder manuell ins Feld des Schreib-Lesegerätes verbracht werden und sich dann durch Körperwärme erwärmen.

Gemäß einer Weiterbildung kann die als Zeitbasis für die für die Auswertung der Zeiten zwischen den Feldstärkeänderungen dienende Frequenz von einem freischwingenden Oszillator erzeugt werden und zu dessen Kalibrierung eines oder mehrere der frequenzbestimmenden Bauteile verändert werden. Zusätzlich oder alternativ kann auch das Teilerverhältnis eines nachgeschalteten Frequenzteilers verändert wird.

Die erste Alternative erscheint vom schaltungstechnischen Aufwand zwar einfacher, setzt aber voraus, daß die Schritte, mit der sich die Frequenz bei Variation der frequenzbestimmenden Bauteile ändert, ihrerseits kalibriert sind. Anderenfalls wäre eine gezielt Kalibrierung der Zeitbasis in einem Schritt nicht möglich.

Die zweite Alternative arbeitet rein digital und ermöglicht die gezielte Kalibrierung der Zeitbasis. Da hierfür nur digitage Schaltkreise benötigt werden, die sich problemlos auf einem Chip integrieren lassen, fällt dieser zusätzliche Aufwand in der Praxis nicht ins Gewicht.

Auch eine kombinierte Anwendung beider vorgenannter Maßnahmen ist möglich, um z. B. einen größeren Variationsbereich zu erzielen, als eine der Maßnahmen für sich ermöglicht.

Nachfolgend wird die Erfindung anhand der Zeichnung erläutert. In dieser zeigen:
- Fig. 1: ein Zeitdiagramm mit einer Darstellung unterschiedlicher logischer Zustände und Zeittoleranzen eines Datensignals,
- Fig. 2: ein Zeitdiagramm mit einer Darstellung der logischen Zustände eines führenden Kalibriersignals und nachfolgender Datensignale und
- Fig. 3: ein vereinfachtes Blockschaltbild eines Dekoders eines Transponders.

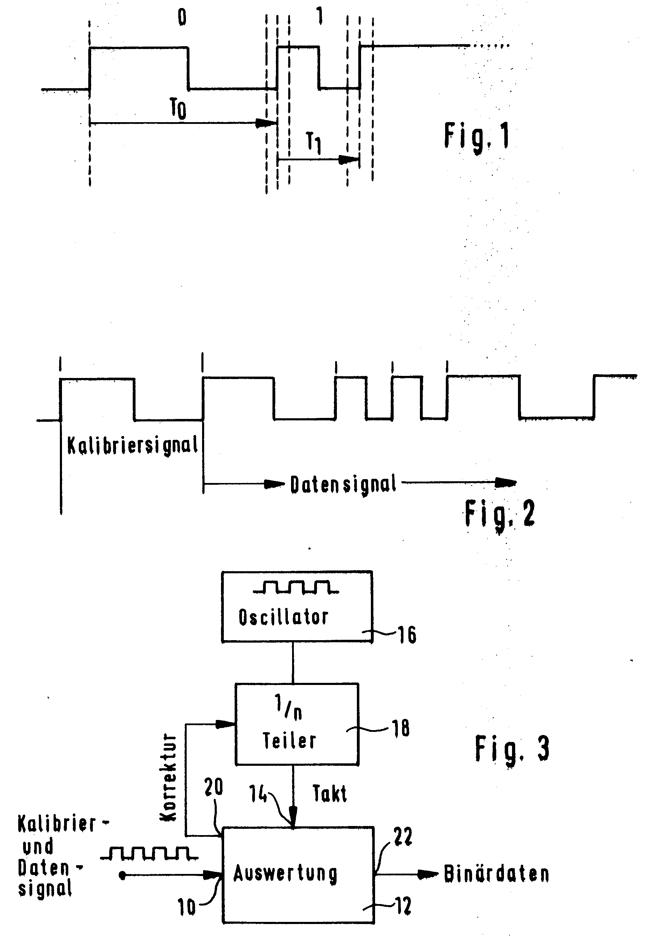

Fig. 1 zeigt ein Zeitdiagramm mit einer Darstellung unterschiedlicher logischer Zustände und Zeittoleranzen eines Datensignals. Die unterschiedlichen logischen Zustände entsprechen einem ein- oder ausgeschalteten HF-Träger. Ein Bit mit der Wertigkeit "0" ist durch eine lange Periodendauer eines Wechsels der logischen Zustände und ein Bit mit der Wertigkeit "1" durch kurze Periodendauer eines Wechsels der logischen Zustände definiert.

Eine übliche Form der digitalen Dekodierung von Daten kann durch das Auszählen der Impulse von einem Oszillator durchgeführt werden, die innerhalb der jeweiligen Perioden für das Bit "0" oder "1" erzeugt werden. Der Zählerstand wird jeweils nach Ablauf einer Periode des Datensignals bewertet.

Durch Variation der Oszillatorfrequenz ergeben sich unterschiedliche Zählerstände für die gleiche Periodendauer. Bei zu großen Abweichungen vom Normwert wird die Periodendauer fehlerhaft dekodiert.

Wird die Periodendauer von T0 und T1 und/oder auch deren Verhältnis sehr groß gewählt, kann die Ungenauigkeit des Referenzoszillators aufgefangen werden. Der Nachteil ist aber eine kleine Datenrate. Mit einer kürzeren Periodendauer und/oder einem kleineren Verhältnis T0/T1 kann eine höhere Datenrate erreicht werden. Wenn die Oszillatorfrequenz aber ungenau ist, kann eventuell nicht mehr zwischen der Periodendauer von T0 und T1 unterschieden werden, so daß die Dekodierung des Datensignals fehlerhaft wird.

Fig. 2 zeigt ein Zeitdiagramm mit einer Darstellung der logischen Zustände eines führenden Kalibriersignals und nachfolgender Datensignale, wie es bei der Erfindung zur Kalibrierung der Zeitbasis verwendet wird.

Dabei wird jeder oder zumindest der zuerst übertragene Datensatz um ein Kalibriersignal erweitert. Das Kalibriersignal hat mindestens die Länge einer erwarteten Periode des Datensignals. Im Dekoder gibt es einen fest programmierten Zählerstand der als Sollwert für die Bewertung des Kalibriersignals dient. Aus der Differenz zwischen dem gespeicherten Sollwert und dem tatsächlichen Zählerstand im Dekoder wird dann ein Korrekturwert berechnet.

Fig. 3 zeigt ein vereinfachtes Blockschaltbild eines Dekoders eines Transponders. Einem Eingang 10 einer Auswerteschaltung 12 wird das aus einem führenden Kalibriersignal und nachfolgenden Datensignalen bestehende Signal, wie es beispielhaft in Fig. 2 dargestellt ist, zugeführt. Außerdem ist der Auswerteschaltung 12 über einen Takteingang 14 ein Takt zugeführt, der mittels eines RC-Oszillators 16 und eines nachfolgenden programmierbaren Teilers 18 gewonnen wird.

Der programmierbare Teilers 18 ist zuerst auf einen Anfangswert eingestellt. Nach Erkennen und Auswerten des Kalibriersignals wird aufgrund des ermittelten Korrekturwertes über ein an einem Steuerausgang 20 der Auswerteschaltung 12 anstehendes Steuersignal der programmierbare Teiler 18 so eingestellt, daß bei unveränderter Frequenz des RC-Oszillators 16 der der Auswerteschaltung 12 zugeführte Takt nun exakt der Sollfrequenz entspricht.

Die dem Kalibriersignal folgenden Daten werden nun korrekt ausgewertet und erscheinen als Binärdaten am Datenausgang 22 der Auswerteschaltung 12.

Mit diesem Verfahren kann man nicht nur die Ungenauigkeiten des RC-Oszillators 16 kompensieren, sondern auch die Datenrate selber variieren. Die obere Grenze wird durch die Oszillatorfrequenz abzüglich Toleranz von ca. 30% vorgegeben.

Die minimale Datenrate wir begrenzt durch die positive Toleranz von ca. + 30 % und den maximal möglichen Teilerfaktor des programmierbaren Teilers 18.

Während der Datenübertragung kann die Auswerteschaltung 12 auch aus der mittleren Periodendauer mehrerer Perioden des Datensignals aktuelle Korrekturwerte ermitteln und das Teilerverhältnis des programmierbaren Teilers 18 gegebenenfalls nachführen.

## Patentansprüche

1. Verfahren zur Datenübertragung zwischen einem Schreib-Lesegerät und einem Transponder durch Feldstärkeänderung eines elektromagnetischen oder magnetischen Feldes und Auswertung der Zeiten zwischen wenigstens zwei aufeinanderfolgenden Feldstärkeänderungen, dadurch gekennzeichnet, daß eine als Zeitbasis für die Auswertung der Zeiten zwischen den Feldstärkeänderungen dienende Frequenz zumindest zu Beginn einer Datenübertragung so kalibriert wird, daß sie in einer vorgegebenen Beziehung zur Periodendauer der Feldstärkeänderungen steht.

2. Verfahren nach Anspruch 1, dadurch gekennzeichnet, daß zur anfänglichen Kalibrierung ein Signal übermittelt wird, dessen Zeitabstände zwischen den Feldstärkeänderungen vordefiniert sind.

3. Verfahren nach Anspruch 2, dadurch gekennzeichnet, daß die Kalibriersignale von Datensignalen abweichen.

4. Verfahren nach Anspruch 3, dadurch gekennzeichnet, daß das zur anfänglichen Kalibrierung übermittelte Signal ein durch zwei aufeinanderfolgende Feldstärkeänderungen begrenzter Puls ist, dessen Länge größer als die Periodendauer der anschließenden Datensignale ist.

5. Verfahren nach einem der Ansprüche 1 bis 4, dadurch gekennzeichnet, daß zur nachfolgenden oder dynamischen Kalibrierung die mittlere Periodendauer der über mehrere Perioden erfaßten Datensignale dient.

6. Verfahren nach einem der Ansprüche 1 bis 5, dadurch gekennzeichnet, daß zumindest zu Beginn der Datenübertragung eine systematische Zeitabweichung von einem Sollwert, die durch die Ungenauigkeit einer zur Auswertung benutzten, internen Zeitbasis auftritt, erfaßt wird und daraus ein Korrekturwert ermittelt wird, mit dem die interne Zeitbasis kalibriert wird.

7. Verfahren nach Anspruch 6, dadurch gekennzeichnet, daß zusätzlich während der Datenübertragung die Abweichung vom Sollwert erfaßt wird und der zu Beginn gewonnene Korrekturwert korrigiert wird.

8. Verfahren nach einem oder mehreren der Ansprüche 1 bis 7, dadurch gekennzeichnet, daß die als Zeitbasis für die für die Auswertung der Zeiten zwischen den Feldstärkeänderungen dienende Frequenz von einem freischwingenden Oszillator (16) erzeugt wird und zu dessen Kalibrierung eines oder mehrere der frequenzbestimmenden Bauteile verändert werden.

9. Verfahren nach einem oder mehreren der Ansprüche 1 bis 7, dadurch gekennzeichnet, daß die als Zeitbasis für die für die Auswertung der Zeiten zwischen den Feldstärkeänderungen dienende Frequenz von einem freischwingenden Oszillator (16) erzeugt wird und zu dessen Kalibrierung das Teilerverhältnis eines nachgeschalteten Frequenzteilers (18) verändert wird.

10. Verfahren nach einem oder mehreren der Ansprüche 1 bis 7, dadurch gekennzeichnet, daß die als Zeitbasis für die für die Auswertung der Zeiten zwischen den Feldstärkeänderungen dienende Frequenz von einem freischwingenden Oszillator (16) erzeugt wird und zu dessen Kalibrierung eines oder mehrere der frequenzbestimmenden Bauteile verändert werden und das Teilerverhältnis eines nachgeschalteten Frequenzteilers (18) verändert wird.

11. Vorrichtung zur Durchführung des Verfahrens nach einem oder mehreren der Ansprüche 1 bis 7, dadurch gekennzeichnet, daß ein freischwingender Oszillator (16) vorgesehen ist, der als Zeitbasis für die Auswertung der Zeiten zwischen den Feldstärkeänderungen dienende Frequenz dient, und zur Kalibrierung der Zeitbasis eines oder mehrere der frequenzbestimmenden Bauteile verändert werden.

12. Vorrichtung zur Durchführung des Verfahrens nach einem oder mehreren der Ansprüche 1 bis 7, dadurch gekennzeichnet, daß ein freischwingender Oszillator (16) vorgesehen ist, der als Zeitbasis für die Auswertung der Zeiten zwischen den Feldstärkeänderungen dienende Frequenz dient, und zur Kalibrierung der Zeitbasis das Teilerverhältnis eines nachgeschalteten Frequenzteilers (18) verändert wird.

13. Vorrichtung zur Durchführung des Verfahrens nach einem oder mehreren der Ansprüche 1 bis 7, dadurch gekennzeichnet, daß ein freischwingender Oszillator (16) vorgesehen ist, der als Zeitbasis für die Auswertung der Zeiten zwischen den Feldstärkeänderungen dienende Frequenz dient, und zur Kalibrierung der Zeitbasis eines oder mehrere der frequenzbestimmenden Bauteile verändert werden und das Teilerverhältnis eines nachgeschalteten Frequenzteilers (18) verändert wird.
